(19) Europäisches Patentamt

European Patent Office

Office européen des brevets

(11) EP 0 865 145 B1

(12) EUROPÄISCHE PATENTSCHRIFT

(45) Veröffentlichungstag und Bekanntmachung des Hinweises auf die Patenterteilung:
14.12.2005 Patentblatt 2005/50

(51) Int Cl.⁷: **H02K 11/00**, H02K 15/00, G01R 31/06, G01R 31/34, G01H 1/00

(21) Anmeldenummer: 98810075.6

(22) Anmeldetag: 02.02.1998

(54) **Verfahren zur Bestimmung des Festigkeitszustandes von Wickelköpfen elektrischer Maschinen und Anordnung zur Durchführung des Verfahrens**

Method for determining the fixation state of the winding heads for electric machines and device for implementing the method

Procédé de détermination de l'état de fixation des têtes de bobinage pour machines électriques et dispositif pour la mise en oeuvre de ladite méthode

(84) Benannte Vertragsstaaten:
FR

(30) Priorität: 17.02.1997 DE 19705922

(43) Veröffentlichungstag der Anmeldung:
16.09.1998 Patentblatt 1998/38

(73) Patentinhaber: Alstom Technology Ltd
5400 Baden (CH)

(72) Erfinder: Stein, Rüdiger, Dr.
5242 Birr (CH)

(56) Entgegenhaltungen:
US-A- 4 261 206          US-A- 5 469 745
US-A- 5 684 718

• PATENT ABSTRACTS OF JAPAN vol. 4, no. 97 (E-18), 12. Juli 1980 (1980-07-12) -& JP 55 061258 A (TOSHIBA CORP), 8. Mai 1980 (1980-05-08)

**Beschreibung**

**TECHNISCHES GEBIET**

Die Erfindung betrifft ein Verfahren zur Bestimmung des Festigkeitszustandes von Wickelköpfen elektrischer Maschinen, wie es im Oberbegriff des Anspruchs 1 beschrieben ist. Ein Solches Verfahren ist aus US-A-4 261 206 bekannt. Des weiteren betrifft die Erfindung eine Anordnung zur Durchführung dieses Verfahrens.

**TECHNOLOGISCHER HINTERGRUND UND STAND DER TECHNIK**

Bei elektrischen Maschinen, insbesondere Generatoren mit einer Leistung von mehr als 200 MVA, muss der Wickelkopf, also der Teil der Wicklung, der beiderseits des Blechpakets über dasselbe hinausragt, derart gestaltet sein, dass er den im Betrieb auftretenden magnetische Kräften standhält. Diese Kräfte können im Kurzschlussfall eine erhebliche Grösse annehmen und stellen somit ein bemerkenswertes Gefahrenpotential für die gesamte Maschine dar.

Grundsätzlich ist es immer möglich, dass die notwendige mechanische Vorspannung des Wickelkopfverbandes nach einigen Betriebsjahren abnimmt. Dies ist um so wahrscheinlicher, je mehr Kurzschlüsse ein Generator beispielsweise erfahren hat. Aber auch bei Generatoren, die häufigen Lastwechseln und den damit verbundenen Temperaturschwankungen ausgesetzt sind, kann es zu Veränderungen der mechanischen Eigenschaften des Wickelkopfverbandes kommen.

Eine Messgrösse, die im Betrieb unter anderem auch von den mechanischen Eigenschaften des Wickelkopfverbandes beeinflusst wird, ist die Wickelkopfvibration, die in radialer, tangentialer und axialer Richtung mit Beschleunigungsaufnehmern lokal gemessen werden kann. Es ist bekannt, aus den an verschiedenen Stellen des Wickelkopfumfangs gemessenen Schwingbeschleunigungen durch zweimalige Integration die lokalen Vibrationsauslenkungen oder -amplituden zu bestimmen und diese auf Grenzwerte zu überwachen. Dabei beschränkt man sich in der Regel auf die doppelt netzfrequenten Anteile der Wickelkopfschwingung. Diese wird im Normalbetrieb wesentlich vom symmetrischen Stromsystem in der Statorwicklung und je nach Konstruktionsart der Wickelkopfabstützung mehr oder weniger auch von der Statorblechkörpervibration angeregt.

Eine nach diesem Prinzip arbeitende Vibrationsüberwachung ist beispielsweise bekannt aus "Modern Monitoring used in Life Management of Generator", Conference Proceedings September 1993, "Elektron" SAIEE-Journal. Hierin wird vorgeschlagen, die Vibrationsamplitude und ihre Phase für jeden messenden optischen Sensor auf ein Wellenreferenzsignal zu beziehen. Problematisch bei dieser Art der Überwachung ist die Zuordnung einer erhöhten Auslenkung der Wickelkopfschwingung zur konkreten Ursache, das heisst es ist nicht möglich festzustellen, ob die Anregung zu- bzw. abgenommen hat oder ob der Wickelkopfverband schwingungstechnisch weicher bzw. härter geworden ist.

Aus JP-A-55 061 258 ist es bekannt, Vibrations-Sensoren in tangentialer und radialer Wirkrichtungen mit einem Wicklungsende zu Verbinden.

**DARSTELLUNG DER ERFINDUNG**

Aufgabe der Erfindung ist es, ein Verfahren zur Bestimmung des Festigkeitszustandes von Wickelköpfen elektrischer Maschinen zu schaffen, das es ermöglicht, die konkrete Ursache für eine Änderung der Wickelkopfschwingungen anzugeben. Des weiteren soll eine Anordnung zur Durchführung des erfindungsgemässen Verfahrens aufgezeigt werden.

Erfindungsgemäss wird die Aufgabe durch die Merkmale der ersten Anspruchs gelöst.

Die Vorteile der Erfindung sind unter anderem darin zu sehen, dass durch den Bezug der Phase der Schwingungsamplitude auf die Phase des durch das Wicklungsende fliessenden elektrischen Stromes, eine Ursacheneingrenzung für die Schwingungen des Wickelkopfes ermöglicht wird.

Bei einer besonders bevorzugten Ausführungsform der Erfindung ist vorgesehen, dass drei optische Beschleunigungsaufnehmer an Wicklungsenden gleichmässig am Umfang eines Wickelkopfes verteilt angeordnet sind, und dabei mindestens ein Beschleunigungsaufnehmer in tangentialer Wirkrichtung ausgerichtet ist und mindestens ein Beschleunigungsaufnehmer in radialer Wirkrichtung.

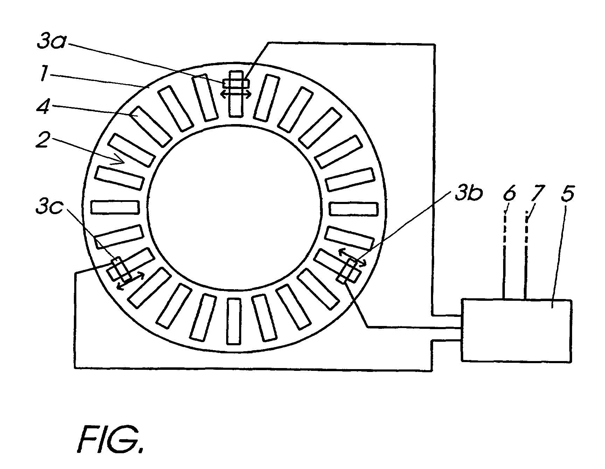

**KURZE BESCHREIBUNG DER ZEICHNUNG**

Die Erfindung wird nachstehend anhand eines Ausführungsbeispiels näher erläutert. In der Zeichnung zeigt die einzige Figur eine vereinfachte Ansicht eines Statorwickelkopfes einer elektrischen Maschine mit einer Anordnung zur Durchführung des erfindungsgemässen Verfahrens.

Es sind nur die für das Verständnis der Erfindung wesentlichen Elemente gezeigt.

**WEG ZUR AUSFÜHRUNG DER ERFINDUNG**

In der einzigen Fig. ist mit 2 ein Wickelkopf einer elektrischen Maschine, z.B. Generator bezeichnet und mit 4 Wicklungsenden, die in ihrer Gesamtheit den Wickelkopf 2 ausmachen. Umgeben ist der Wickelkopf von einem Maschinengehäuse 1. Über den Umfang des Wickelkopfes gleichmässig verteilt sind drei optische Beschleunigungsaufnehmer 3a,b,c, angeordnet, wobei zwei der Beschleunigungsaufnehmer 3b,c in radialer Wirkrichtung, und ein Beschleunigungsaufnehmer 3a in tangentialer Wirkrichtung ausgerichtet ist. Bei der Wahl des Montageortes wird jenen Wicklungsenden 4 der Vorzug gegeben, bei denen die grössten Auslenkungen erwartet werden unter der Bedingung, dass in jeder Phase U, V, W der Generatorwicklung je ein Beschleunigungsaufnehmer 3a,b,c angeordnet ist. Die optischen Beschleunigungsaufnehmer 3a,b,c sind mit einer Auswerteinheit 5 verbunden. Über eine Messleitung 6, die mit nicht dargestellten Strommessstellen verbunden ist, werden der Auswerteinheit 5 Strommesswerte $I_u$, $I_v$, $I_w$ der Generatorphasen zugeführt. Eine Messleitung 7, die mit nicht dargestellten Temperatursensoren nahe den Messstellen der Beschleunigungsaufnehmern verbunden ist, übermittelt entsprechende Temperaturmesswerte T an die Auswerteinheit 5.

Die optischen Beschleunigungsaufnehmer 3a, b,c erfassen die Schwingbeschleunigung an den Wicklungsenden 4 des in Betrieb befindlichen Generators. Grundsätzlich gibt es drei Mechanismen, die die Vibrationsauslenkung der Wicklungsenden 4 beeinflussen:

- der grundfrequente Statorstrom 50Hz (oder 60Hz für USA) führt zu doppeltfrequenten Kräften zwischen den Leitern im Wickelkopf; hierbei handelt es sich um eine Kraftanregung der Vibrationen;

- die grundfrequente magnetische Flussdichte im Generatorstator 50Hz (oder 60Hz für USA) führt zu doppeltfrequenten Blechkörpervibrationen, die je nach mechanischer Kopplung zwischen Blechkörper und Wickelkopf letzteren zu Schwingungen anregen; diese Vibrationseinflüsse basieren also auf einer Weganregung;

- schliesslich kann eine Verschiebung der Eigenfrequenz die Amplitude der Vibratonsauslenkung beeinflussen, ohne dass sich die Anregung geändert hat, wobei dieser Mechanismus kurz als Eigenfrequenzvariation bezeichnet wird.

Die von den Beschleunigungsaufnehmern 3a, b,c erzeugten Messwerte werden in der Auswerteinheit 5 durch eine Fourier-Transformation und anschliessender zweimaliger Integration zu einem Auslenkungs- oder Amplitudensignal A der Vibrationen umgewandelt. Des weiteren werden in Bezug auf die Phase eines Generatorstatorstrom $I_u$ oder $I_v$, $I_w$ die Phasen φ der Vibrationsamplituden bestimmt. Zu diesem Zweck umfasst die Auswerteinheit 5 im wesentlichen eine Messwerterfassung und -aufbereitung für die Beschleunigungsaufnehmer 3a,b,c, eine Messwerterfassung und -aufbereitung für die Generatorstatorströme $I_u$, $I_v$, $I_w$, eine Messwerterfassung und -aufbereitung für die Temperaturen der Messstellen der Beschleunigungsaufnehmer und eine Computereinheit.

Wie aus den oben beschriebenen, für die Vibrationsauslenkung wesentlichen Mechanismen hervorgeht, sind vor allem die doppeltfrequenten Anteile der Vibrationsauslenkung A und der zugehörigen Phase φ interessant, also die 100Hz (120Hz) Anteile. Für die Bestimmung des Festigkeitszustandes des Wickelkopfes 2 werden die erhaltenen Werte für die Vibrationsauslenkung A und die Phase φ zu entsprechenden Referenzwerten $A_{ref}$ und $\varphi_{ref}$ ins Verhältnis gesetzt. Für Referenzwerte $A_{ref}$ und $\varphi_{ref}$ wird das folgende Modell zugrundegelegt:

Da der Statorstrom bezüglich der Vibrationsanregungen die bestimmende Grösse ist, und der Strom quadratisch in die resultierende Kraft eingeht, gilt für die Referenzwertberechung $A_{ref}$ der Vibrationsamplitude:

$$A_{ref} = w_0 + w_1 \cdot I + w_2 \cdot I^2$$

Mit dieser Gleichung werden für jeden Betriebspunkt des jeweiligen Phasenstroms $I_u$, $I_v$, $I_w$ die Referenzwerte $A_{ref}$ bestimmt, wobei die Konstanten $w_0$, $w_1$, $w_2$ beispielsweise während der Inbetriebnahme des Generators bei sogenannten "Fingerprint-Messungen" der Vibrationen in verschiedenen Lastpunkten des Generators ermittelt worden sind. Die Gleichung für die Referenzwerte $A_{ref}$ umfasst sowohl die Kraftanregung durch den Statorstrom I ($w_1$, $w_2$), sowie die Weganregung durch die Blechkörpervibrationen ($w_0$).

Für die Phase werden die Referenzwerte $\varphi_{ref}$ wie folgt bestimmt; entscheidend ist hierbei, dass die Phasenverschiebung zwischen der Vibrationsauslenkung und der periodisch anregenden Kraft als Folge des Stromes (Kraftanregung) nur mit der Eigenfrequenz des Wickelkopfes 2 veränderlich ist. Das Modell für die Phasenreferenz $\varphi_{ref}$ berücksichtigt im wesentlichen den Einfluss der lastbedingten Erwärmung der Messstellen auf die Eigenfrequenz des Wickelkopfes. Im betrachteten Bereich zwischen Leerlauf, also unbelasteter und damit kalter Maschine, und Vollast ist die Eigenfrequenzvariation oder - änderung und die Phasenänderung linear mit der Temperatur T verknüpft. Somit gilt für die Referenzwerte der Phase:

$$\varphi_{ref} = p_0 + p_1 \cdot T$$

Auch mit dieser Gleichung werden für jeden Betriebspunkt die Referenzwerte $\varphi_{ref}$ bestimmt, wobei die Konstanten $p_0$, $p_1$ beispielsweise während der Inbetriebnahme des Generators bei sogenannten "Fingerprint-Messungen" der Vibrationen in verschiedenen Lastpunkten des Generators ermittelt worden sind.

Während des Generatorbetriebs werden nun die gemessenen Vibrationsamplituden A und die zugehörigen Phasen φ erfasst. Aus den Verhältnissen

$$\Delta A = \frac{A - A_{ref}}{A}$$

und

$$\Delta\varphi = \frac{\varphi - \varphi_{ref}}{\varphi}$$

wird dann der Festigkeitszustand des Wickelkopfes wie folgt ermittelt:

1. Wird eine grössere Vibrationsamplitude beobachtet bei veränderter Generatorlast und $\Delta A$ bleibt 0, liegt eine normale strombedingte Vibrationserhöhung vor.

2. Wird eine grössere Vibrationsamplitude beobachtet bei veränderter Generatorlast und $\Delta A$ ist grösser 0, so liegt keine strombedingte Vibrationserhöhung vor.

3. Nimmt dabei $\Delta\varphi$ einen Wert ungleich 0 an, so weist dies auf eine Lockerung des Wickelkopfes hin, unter der Voraussetzung, dass der $\varphi$ sich in derselben Richtung geändert hat wie bei einer temperaturbedingten Eigenfrequenzverschiebung zum Resonanzzustand des Wickelkopfes hin. Die Phase $\varphi$ kann dabei Werte zwischen 0° und 360° annehmen. Hierbei wird vorausgesetzt, dass keine Veränderungen der Kühlbedingungen vorliegen. Derartige Veränderungen der Kühlbedingungen können beispielsweise dann auftreten, wenn sich die Kaltgastemperatur im Generator ändert.

Durch die Anwendung des beschriebenen Verfahrens wird es erstmals möglich für Generatoren, die eine hohe Verfügbarkeit aufweisen müssen, im Betrieb Informationen über den Zustand verschleissbehafteter Anlage-Komponenten wie Wickelkopfabstützungen zu liefern. Dadurch kann die im allgemeinen zeitabhängige Planung von Revisionsintervallen allmählich in eine zustandsabhängige Planung übergehen. Längere Betriebsintervalle und vermeidbare Stillstandzeiten im Falle notwendiger Ersatzteilbeschaffung erhöhen die Verfügbarkeit eines Generators. Gegenüber einer konventionellen Grenzwertüberwachung können Veränderungen des Anlagezustands mittels beschriebener Ursachendiagnose erkannt werden, bevor kritische Werte von Vibrationsamplituden erreicht werden.

Denkbar im Sinn der Erfindung ist die gleichzeitige Anwendung des Verfahrens und der Anordnung zur Durchführung des Verfahrens an den Wickelköpfen auf beiden Seiten des Generators, also auf der Antriebsseite und Nichtantriebsseite.

Hierbei sind selbstverständlich auch nichtoptische Beschleunigungsaufnehmer einsetzbar, die zudem auch in axialer Wirkrichtung angeordnet werden können

## BEZUGSZEICHENLISTE

| 1 | Maschinengehäuse |
| 2 | Wickelkopf |
| 3a,b,c | Sensor |
| 4 | Wicklungsenden |
| 5 | Auswerteinheit |
| 6, 7 | Messleitung |
| A | Schwingungsamplitude |
| $A_{ref}$ | Amplitudenreferenz |
| $\Delta A$ | Quotient aus A und $A_{ref}$ |
| $\varphi$ | Phase von A |
| $\varphi_{ref}$ | Phasenreferenz |
| $\Delta\varphi$ | Quotient aus $\varphi$ und $\varphi_{ref}$ |
| T | Temperatur |

## Patentansprüche

1.  Verfahren zur Bestimmung des Festigkeitszustandes von Wickelköpfen (2) elektrischer Maschinen, wobei mittels mindestens eines Sensors (3), der an einem Wicklungsende (4) eines Wickelkopfes (2) angeordnet und mit einer Auswerteinheit (5) verbunden ist, eine Schwingungsamplitude (A) des Wicklungsendes erfasst wird,
    **dadurch gekennzeichnet,**
    **dass** eine Phase ($\varphi$) der Schwingungsamplitude (A) in Bezug auf eine Phase eines durch das Wicklungsende (4) fliessenden elektrischen Stromes bestimmt wird,
    **dass** ein Quotient ($\Delta A$) aus der Schwingungsamplitude (A) und einer vom elektrischen Strom abhängigen Amplitudenreferenz ($A_{ref}$) bestimmt wird, dass ein Quotient ($\Delta\varphi$) aus der Phase ($\varphi$) der Schwingungsamplitude (A) und einer von der Temperatur des Wickelkopfes (2) abhängigen Phasenreferenz ($\varphi_{ref}$) gebildet wird, und
    **dass** der Quotient ($\Delta A$) aus der Schwingungsamplitude (A) und der Amplitudenreferenz ($A_{ref}$) und/ oder der Quotient ($\Delta\varphi$) aus der Phase ($\varphi$) und der Phasenreferenz ($\varphi_{ref}$) den Festigkeitszustand des Wickelkopfes (2) bestimmen.

2.  Anordnung zur Durchführung des Verfahrens nach Anspruch 1,
    **dadurch gekennzeichnet,**
    **dass** drei Sensoren (3a,b,c) an den Wicklungsenden (4) des Wickelkopfes (2) gleichmässig an dessen Umfang verteilt angeordnet sind, und dass die Sensoren (3a,b,c) aus optischen Beschleunigungsaufnehmern aufgebaut sind, wobei mindestens ein Sensor (3) in tangentialer Wirkrichtung und mindestens ein Sensor (3) in radialer Wirkrichtung mit jeweils einem Wicklungsende (4) verbunden ist.

3.  Anordnung nach Anspruch 2
    **dadurch gekennzeichnet,**
    **dass** die Auswerteinheit (5) eine Messwerterfassung und -aufbereitung für die Sensoren (3a,b,c) aufweist, eine Messwerterfassung und -aufbereitung für Statorströme der elektrischen Maschine umfasst, und eine Computereinheit beinhaltet.

## Claims

1. Method for determining the state of strength of winding overhangs (2) of electric machines, at least one sensor (3), which is arranged on a winding end (4) of a winding overhang (2) and is connected to an evaluation unit (5) being used to detect a vibration amplitude (A) of the winding end, **characterized in that** a phase ($\varphi$) of the vibration amplitude (A) is determined with reference to a phase of an electric current flowing through the winding end (4), **in that** a quotient ($\Delta A$) is determined from the vibration amplitude (A) and an amplitude reference ($A_{ref}$) dependent on the electric current, **in that** a quotient ($\Delta\varphi$) is formed from the phase ($\varphi$) of the vibration amplitude (A) and a phase reference ($\varphi_{ref}$) dependent on the temperature of the winding overhang (2), and **in that** the quotient ($\Delta A$) of the vibration amplitude (A) and the amplitude reference ($A_{ref}$) and/or the quotient ($\Delta\varphi$) of the phase ($\varphi$) and the phase reference ($\varphi_{ref}$) determine the state of strength of the winding overhang (2).

2. Arrangement for carrying out the method according to Claim 1, **characterized in that** three sensors (3a, b, c) on the winding ends (4) of the winding overhang (2) are arranged distributed uniformly on the circumference of the latter, and **in that** the sensors (3a, b, c) are constructed from optical acceleration pickups, at least one sensor (3) being connected in the tangential effective direction, and at least one sensor (3) being connected in the radial effective direction with one winding end (4) in each case.

3. Arrangement according to Claim 2, **characterized in that** the evaluation unit (5) has a measured-value acquisition and conditioning system for the sensors (3a, b, c), comprises a measured-value acquisition and conditioning system for stator currents of the electric machine, and contains a computer unit.

## Revendications

1. Procédé de détermination de l'état de fixation de têtes de bobinages (2) de machines électriques, une amplitude d'oscillation (A) de l'extrémité du bobinage étant captée au moyen d'au moins un capteur (3), lequel est disposé à une extrémité (4) du bobinage d'une tête de bobinage (2) et est relié à une unité d'évaluation (5), **caractérisé en ce qu'**une phase ($\varphi$) de l'amplitude d'oscillation (A) est déterminée par rapport à une phase d'un courant électrique parcourant l'extrémité (4) du bobinage, **en ce**

qu'un quotient ($\Delta A$) est déterminé à partir de l'amplitude d'oscillation (A) et d'une référence d'amplitude ($A_{ref}$) dépendant du courant électrique, **en ce qu'**un quotient ($\Delta\varphi$) est formé à partir de la phase ($\varphi$) de l'amplitude d'oscillation (A) et d'une référence de phase ($\varphi_{ref}$) dépendant de la température de la tête du bobinage (2) et **en ce que** le quotient ($\Delta A$) de l'amplitude d'oscillation (A) et de la référence d'amplitude ($A_{ref}$) et/ou le quotient ($\Delta\varphi$) de la phase ($\varphi$) et de la référence de phase ($\varphi_{ref}$) détermine (nt) l'état de fixation de la tête du bobinage (2).

2. Dispositif destiné à la mise en oeuvre du procédé selon la revendication 1, **caractérisé en ce que** trois capteurs (3a, b, c) sont disposés aux extrémités (4) du bobinage de la tête du bobinage (2) de façon uniformément répartie sur la circonférence de celle-ci et **en ce que** les capteurs (3a, b, c) sont constitués de capteurs optiques d'accélération, au moins un capteur (3) étant relié dans le sens tangentiel de fonctionnement et au moins un capteur (3) étant relié dans le sens radial de fonctionnement à chaque fois une extrémité (4) du bobinage.

3. Dispositif selon la revendication 2, **caractérisé en ce que** l'unité d'évaluation (5) comprend une saisie et un traitement des valeurs de mesure des capteurs (3a, b, c), une saisie et un traitement des valeurs de mesure des courants du stator de la machine électrique et une unité de calcul.

FIG.